# EUROPEAN PATENT SPECIFICATION

(11) **EP 1 944 517 B1**
(45) Date of publication and mention of the grant of the patent: **21.01.2015**
(21) Application number: 07020985.3
(22) Date of filing: 26.10.2007
(51) Int. Cl.: F16C 19/46, F16C 33/60, F16C 43/04, B65B 13/30

(54) **Full complement needle bearing with retaining grooves for the needles in the collars of the outer race**
Vollrolliges Nadellager mit Haltenuten für die Nadeln in den Borden des Außenrings
Roulement à aiguilles complet avec rainures de retenue des aiguilles dans les bords de la bague extérieure

(30) Priority: 10.01.2007 US 621659
(43) Date of publication of application: 16.07.2008
(73) Proprietor: Signode International IP Holdings LLC, Glenview IL 60026 (US)
(72) Inventor: Crittenden, David E., Schaumburg, Illinois 60195 (US); Figiel, Janusz, Mundelein, Illinois 60060 (US)
(74) Representative: Roche, von Westernhagen & Ehresmann

(56) References cited:
- CH-A- 257 817
- DE-A1- 2 824 151
- GB-A- 558 342
- US-A- 1 972 355
- US-A- 2 016 923
- US-A- 2 038 475
- US-A- 2 166 673
- US-A- 2 259 325
- US-A1- 2002 129 501

## Description

The present invention is directed to a strapping or tensioning tool comprising a bearing. More particularly, the present invention is directed to a system and method for retaining in place the rollers of a full complement needle bearing of said tool.

Needle bearings are one of the well-known types of bearings used to provide low-friction movement between two surfaces. Needle bearings include an outer bearing ring that permits a set of rollers to roll between an inner surface of the outer bearing ring and a shaft inserted into the bearing. Generally, the rollers used in needle bearings have high length-to-diameter ratios (hence the name the needle bearing) as compared to typical roller bearings.

One type of needle bearing is a full complement needle bearing. Full complement needle bearings typically include a full complement of rollers packed against each other around an entire periphery to define the bearing surface, but do not include any inner ring or cage to retain the rollers. This design provides the highest load-to-size ratio for a given roller diameter and length, thus minimizing the amount of space required for the bearing.

However, there are drawbacks to the typical full complement needle bearing design. Most notably, whenever the shaft is removed to perform maintenance or to lubricate the bearing, the rollers tend to fall out of the outer bearing ring. The rollers are then difficult and tedious to replace.

Accordingly, there is a need for an improved strapping or tensioning tool comprising a full-complement needle bearing in which the rollers are maintained in place with the shaft removed. Desirably, such a bearing is compact and provides a high load-to-size ratio. A similar bearing is known from US 1,972,355, while a needle bearing is disclosed comprising an outer race formed of three components, namely a ring and two washers forming radially inwardly directed collars on opposing ends of the race to form a channel wherein a plurality of rollers is disposed within the channel with a very small clearance between the rollers. Moreover, from DE 28 24 151 A a strapping tool is disclosed. The shown tool discloses a handle and even ratchets. Full complement needle bearings with separate two washers received in respective counterbores of an outer ring are also known from the prior art, for example from US 2,166,673 A, US 2,259,325 A and CH 257 817 A. US 2002/129501 A1 is also a prior art document disclosing a strapping machine.
According to the invention there is provided a strapping tool or a tensioning tool comprising a bearing as defined in claim 1.

The bearing of the tool includes a race and a plurality of rollers. The race has first and second radially inwardly directed collars on opposing ends of the race to form a channel. The first collar includes a first groove formed along an inner surface of the first collar, and the second collar includes a second groove formed along an inner surface of the second collar.

Each of the plurality of rollers has a central portion, a first nib extending from one end of the central portion and a second nib extending from an opposing end of the central portion. At least a portion of the first nib is positioned within the first groove and at least a portion of the second nib is positioned within the second groove to retain the plurality of rollers within the channel. The bearing is a full-complement needle bearing and is configured so that the rollers are maintained in place with the shaft removed. The race is formed from three components.

In one aspect of the invention, the race may be formed from a ring, a first washer, and a second washer. The ring includes a first counterbore formed in a first side of the ring and a second counterbore formed in an opposing side of the ring. The first counterbore is shaped so as to receive at least a portion of the first washer and the second counterbore is shaped so as to receive at least a portion of the second washer. The first and second grooves are formed on inner surfaces of the first and second washers.

These and other features and advantages of the present invention will be apparent from the following detailed description, in conjunction with the appended claims.

The benefits and advantages of the present invention will become more readily apparent to those of ordinary skill in the relevant art after reviewing the following detailed description and accompanying drawings, wherein:
FIG. 1 illustrates a cross-section of one embodiment of a full complement needle bearing according to the present invention;
FIG. 2 illustrates a cross-section of another embodiment of a bearing according to the present invention;
FIG. 3 illustrates a cross-section plan view of a bearing race according to the present invention;
FIG. 4 is an exemplary tool in which the present bearing can be used in the tool handle and carrier;

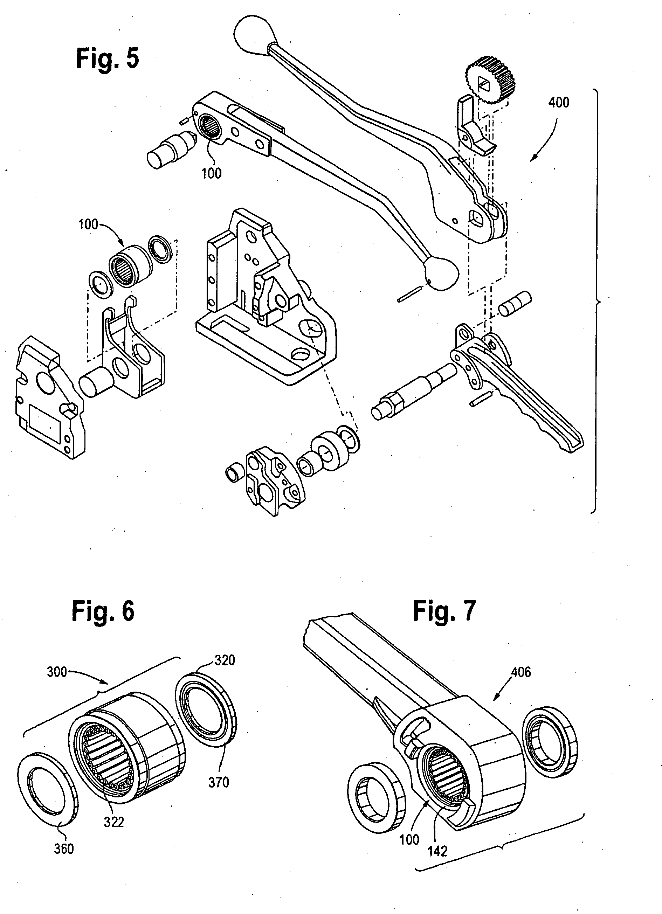

FIG. 5 is an exploded view of another exemplary tool in which the bearing can be used in the tool handle and carrier;
FIG. 6 is an illustration of a stand-alone bearing; and
FIG. 7 is an illustration of the bearing incorporated into a tool handle.

### DETAILED DESCRIPTION OF THE INVENTION

While the present invention is susceptible of embodiment in various forms, there is shown in the figures and will hereinafter be described a presently preferred embodiment with the understanding that the present disclosure is to be considered an exemplification of the invention and is not intended to limit the invention to the specific embodiment illustrated.

It should be further understood that the title of this section of the specification, namely, "Detailed Description Of The Invention", does not imply, nor should be inferred to limit the subject matter disclosed herein.

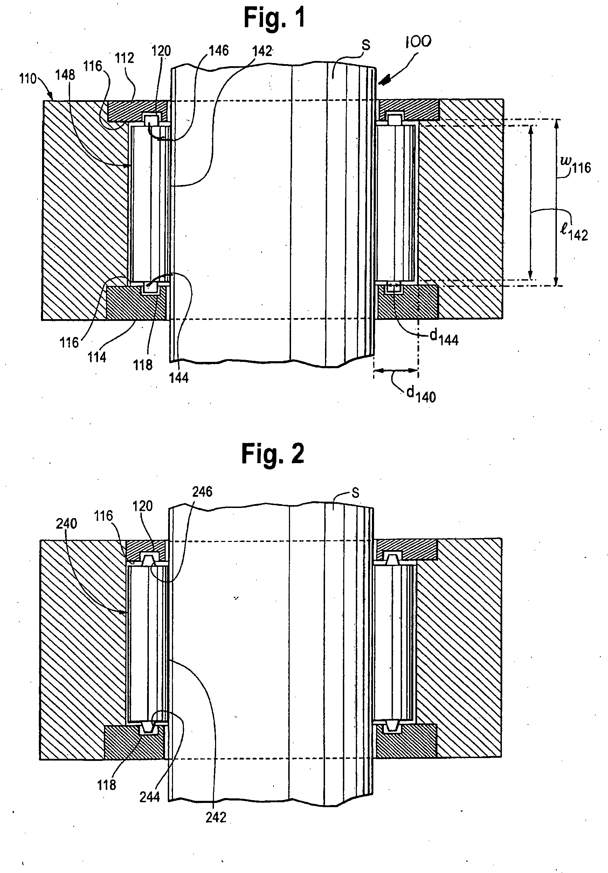

Referring to the figures, and in particular to FIG. 1, there is shown an embodiment of a full complement needle bearing 100 embodying the principles of the present invention. The bearing includes a race 110 and a set of rollers 140. The race 110 is a support or carriage to secure and maintain the rollers 140. The race 110 includes two radially inwardly directed collars 112 and 114 and forms a radial channel 116 for the rollers 140. Each of the collars 112, 114 also includes a circular inner groove 118, 120 formed in the channel 116 wall. The inner grooves 118, 120 are used to retain the rollers 140 within the channel.

Each of the rollers 140 has a central portion 142 and two nibs 144, 146 extending from opposing ends of the central portion 142. The nibs 144, 146 define spindles or stubs that are concentric, e.g., coaxial, with a roller central portion 142. The central portion 142 is cylindrical in shape and preferably has a length l₁₄₂ that is approximately equal to, or slightly less than, a width w₁₁₆ of the channel 116 formed between the collars 112 and 114. The diameter d₁₄₀ of the rollers 140 is sufficiently large that the rollers 140 can contact a shaft S inserted into the center of the bearing 100 in order to allow for low-friction rotation of the shaft relative to the bearing 100. Each of the rollers 140 is a needle roller having a length l₁₄₀ that is substantially greater than its diameter d₁₄₀.

The nibs 144 and 146 are shaped so that they are retained within the inner grooves 118 and 120. In the embodiment illustrated in FIG. 1, the nibs 144 and 146 are cylindrical in shape and have a diameter less than that of the central portion 142. The diameter (e.g., d₁₄₄) of the nibs 144, 146 is also preferably less than a width of the inner grooves 118, 120 so that the rollers 140 can move freely along the inner grooves 118, 120 when the nibs 144, 146 are positioned within the inner grooves.

In an alternate embodiment shown in FIG. 2, the nibs 244, 246 are tapered such that the ends of the nibs proximal to the central portion 242 have a diameter larger than at the distal ends. Of course, it is understood that other shapes may also be used so long as the rollers 240 are capable of being retained in the channel by the inner grooves 118 and 120. For example, the nibs may be conical, spherical, or any other suitable shape.

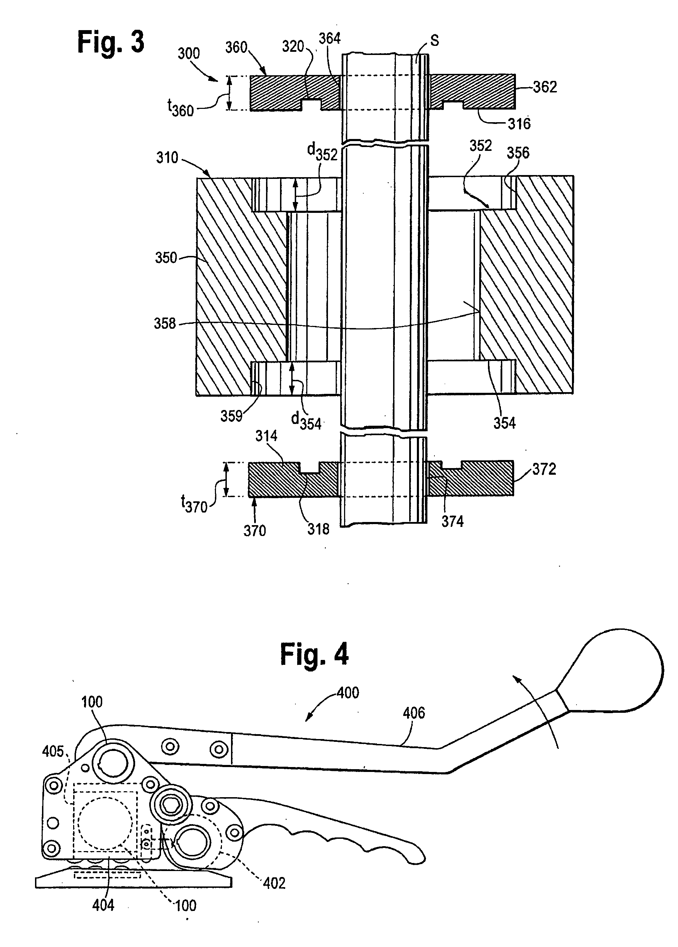

As best illustrated in FIG. 3, the race 310 may be formed from three components: an outer ring 350, a first washer 360, and a second washer 370. The inner surface 358 of ring 350 is generally cylindrical in shape and includes a first counterbore 352 formed in a first side of the race 310, and a second counterbore 354 formed in an opposing side of the race 310. Those skilled in the art will recognize that housings of other shapes (e.g., incorporation into tool handles) can be used, which housings are intended to rotate freely.

The first and second washers 360 and 370 are configured to be retained in the first and second counterbores 352 and 354, respectively, such as by press-fitting. In one embodiment, the first washer includes an exterior edge 362 that defines a diameter approximately equal to a diameter of a peripheral edge 356 of the first counterbore 352, and an interior edge 364 having a diameter greater than a diameter of the shaft S. The first washer 360 also preferably has a thickness t₃₆₀ that is approximately equal to a depth d₃₅₂ of the first counterbore 352. Similarly, the second washer 370 has an exterior edge 372 having a diameter approximately equal to a diameter of a peripheral edge 359 of the second counterbore 354, and an interior edge 374 that defines a diameter greater than a diameter of the shaft S. The washer 370 has a thickness t₃₇₀ that is approximately equal to a depth d₃₅₄ of the second counterbore 354. The inner grooves 318, 320 are formed in the portion of the each washer 360, 370 that extends inwardly past the inner surface 358 of the ring 350 when the washers 360, 370 are secured in the ring 350. Thus, when positioned within the first and second counterbores 352 and 354, the first and second washer form the collars 312 and 314. This configuration is proved so that a shaft S positioned in the bearing 300 rides on the rollers (not shown), and is free to rotate and is free from contact with the washer inner surfaces 364, 374.

To assemble the bearing 300, the first washer 360 is secured by pressing the first washer 360 into the first counterbore 352. One nib of each of the rollers is placed into the inner groove 320 of the first washer 360. The second washer 370 is then secured into the second counterbore 354 such that the opposing nib of each roller is within the inner groove 318 of the second washer 370. The rollers, by virtue of the inner grooves 318, 320 and the nibs, are therefore encapsulated and retained within the race channel 316. As a result, the rollers are prevented from falling out of the race 310 when a shaft S is removed from the center of the bearing 300.

One example of a tool that may be used with the present invention is illustrated in FIG. 4. Such a tool can, for example, be a hand-held strapping tool, such as an SCM strapping tool manufactured by ITW Signode of Glenview, Illinois. In a tool 400 of, for example, this type of tool, the bearing 100 can be used in the carrier 405 (positioned in the tool body 404) that moves up and down to punch the strap. The carrier 405 can be subjected to considerable forces and stresses, and it has been found that such a bearing 100 functions well in this environment. The bearing 100 can also be positioned in the tool 400 handle 406 to permit free rotation of the handle 406 during operation.

Other strapping or tensioning tools, including manual and powered tools can also benefit from the present full complement needle bearing. Those skilled in the art will appreciate that such tools are configured to tension a strap around a load, and can include functions to, for example, adhere the strap onto itself, and cut the feed end of the strap. The present bearing can also be used in a tensioning tool handle or the like.

Use of a full complement bearing allows the size of the strapping tool to be compact while providing a bearing that is capable of retaining the rollers when maintenance is performed on the component of the tool that is carried by the bearing (e.g., the shaft carried by the bearing).

It is also understood that various aspects and design features of the bearing may be modified without departing from the scope of the invention. The ring and/or the entire race may also be integrally formed with a tool for which the bearing is being used. The dimensions of the ring, the first washer, the second washer, and the rollers may also vary depending on the application in which the bearing is being used.

In the present disclosure, the words "a" or "an" are to be taken to include both the singular and the plural. Conversely, any reference to plural items shall, where appropriate, include the singular.

From the foregoing it will be observed that numerous modifications and variations can be effectuated without departing from the scope of the present invention. It is to be understood that no limitation with respect to the specific embodiments illustrated is intended or should be inferred. The disclosure is intended to cover all such modifications as fall within the scope of the claims.

## Claims

1. A strapping tool or a tensioning tool (400) comprising a full complement needle bearing (100, 300),
the full complement needle bearing (100, 300) is comprising:
a race (110, 310) having first and second radially inwardly directed collars (112, 114) on opposing ends of the race to form a channel (116, 316); the first collar (112) having a first groove (120) formed along an inner surface of the first collar, and the second collar (114) having a second groove (118) formed along an inner surface of the second collar; and
a plurality of rollers (140, 240) disposed within the channel (116, 316); each of said plurality of rollers having a central portion (142, 242); a first nib (146, 246) extending from one end of the central portion and a second nib (144, 244) extending from an opposing end of the central portion,
wherein at least a portion of the first nib (146, 246) is retained within the first groove (120) and at least a portion of the second nib (144, 244) is retained within the second groove (118),
the race (110, 310) being formed from three components, namely a ring (350) or housing of other shape intended to rotate freely, a first washer (360) and a second washer (370).

2. The tool of claim 1 wherein each of the first and second nibs (144, 146) is substantially cylindrical in shape.

3. The tool of claim 1 wherein each of the first and second nibs (244, 246) is tapered.

4. The tool of claim 1 wherein the race is comprised of a ring, a first washer, and a second washer and the ring (350) is substantially cylindrical in shape.

5. The tool of claim 4 wherein the ring (350) includes a first counterbore (352) formed in a first side of the ring and a second counterbore (354) formed in an opposing side of the ring, and wherein the first counterbore (352) is shaped so as to receive at least a portion of the first washer (360) and the second counterbore (354) is shaped so as to receive at least a portion of the second washer (370).

6. The tool of claim 5 wherein the first groove (120) is formed in an inner surface of the first washer (360) and the second groove (118) is formed in an inner surface of the second washer (370).

7. The tool of claim 1 whereby the bearing (100, 300) is disposed in a handle (406) of the tool (400).

8. The tool of claim 1 wherein the bearing (100, 300) is disposed in the carrier of a tool.

## Patentansprüche

1. Umreifungs- oder Spannwerkzeug (400), das ein vollrolliges Nadellager (100, 300) umfasst,
wobei das vollrollige Nadellager (100, 300) Folgendes umfasst:
einen Ring (110, 310) mit ersten und zweiten radial nach innen gerichteten Borden (112, 114) an gegenüberliegenden Enden des Rings, um einen Kanal (116, 316) zu bilden, wobei der erste Bord (112) eine entlang einer inneren Oberfläche des ersten Bords ausgebildete erste Nut (120) und der zweite Bord (114) eine entlang einer inneren Oberfläche des zweiten Bords ausgebildete zweite Nut (118) haben; und
mehrere Rollen (140, 240), die sich innerhalb des Kanals (116, 316) befinden, wobei jede der mehreren Rollen einen zentralen Abschnitt (142, 242) hat, wobei sich eine erste Nase (146, 246) von einem Ende des zentralen Abschnitts aus und sich eine zweite Nase (144, 244) von einem gegenüberliegenden Ende des zentralen Abschnitts aus erstrecken,
wobei mindestens ein Abschnitt der ersten Nase (146, 246) innerhalb der ersten Nut (120) und mindestens ein Abschnitt der zweiten Nase (144, 244) innerhalb der zweiten Nut (118) zurückgehalten werden,
wobei der Ring (110, 310) aus drei Komponenten gebildet ist, nämlich aus einem Ring (350) oder einem Gehäuse mit anderer Form, um eine freie Drehung zu ermöglichen, sowie aus einer ersten Unterlegscheibe (360) und einer zweiten Unterlegscheibe (370).

2. Werkzeug nach Anspruch 1, bei dem jede der ersten und zweiten Nasen (144, 146) im Wesentlichen zylindrisch geformt ist.

3. Werkzeug nach Anspruch 1, bei dem jede der ersten und zweiten Nasen (244, 246) konisch geformt ist.

4. Werkzeug nach Anspruch 1, bei dem der Außenring aus einem Ring, einer ersten Unterlegscheibe und einer zweiten Unterlegscheibe besteht, wobei der Ring (350) im Wesentlichen zylindrisch geformt ist.

5. Werkzeug nach Anspruch 4, bei dem der Ring (350) eine erste Ansenkung (352), die in einer ersten Seite des Rings ausgebildet ist, und eine zweite Ansenkung (354), die in einer gegenüberliegenden Seite des Rings ausgebildet ist, beinhaltet, wobei die erste Ansenkung (352) so geformt ist, dass sie mindestens einen Abschnitt der ersten Unterlegscheibe (360) aufnimmt, und wobei die zweite Ansenkung (354) so geformt ist, dass sie mindestens einen Abschnitt der zweiten Unterlegscheibe (370) aufnimmt.

6. Werkzeug nach Anspruch 5, bei dem die erste Nut (120) in einer inneren Oberfläche der ersten Unterlegscheibe (360) und die zweite Nut (118) in einer inneren Oberfläche der zweiten Unterlegscheibe (370) ausgebildet sind.

7. Werkzeug nach Anspruch 1, bei dem sich das Lager (100, 300) in einem Handgriff (406) des Werkzeugs (400) befindet.

8. Werkzeug nach Anspruch 1, bei dem sich das Lager (100, 300) im Träger eines Werkzeugs befindet.

## Revendications

1. Outil de cerclage ou outil de tensionnement (400) comprenant un palier à aiguilles complet (100, 300),
le palier à aiguilles complet (100, 300) comprenant :
un chemin de roulement (110, 310) ayant des premier et deuxième colliers (112, 114) orientés radialement vers l'intérieur à des extrémités opposées du chemin de roulement pour former un canal (116, 316) ; le premier collier (112) ayant une première gorge (120) formée le long d'une surface interne du premier collier, et le deuxième collier (114) ayant une deuxième gorge (118) formée le long d'une surface interne du deuxième collier ; et
une pluralité de rouleaux (140, 240) disposés à l'intérieur du canal (116, 316) ; chacun de ladite pluralité de rouleaux ayant une portion centrale (142, 242) ; un premier plot (146, 246) s'étendant depuis une extrémité de la portion centrale et un deuxième plot (144, 244) s'étendant depuis une extrémité opposée de la portion centrale,
au moins une portion du premier plot (146, 246) étant retenue à l'intérieur de la première gorge (120) et au moins une portion du deuxième plot (144, 244) étant retenue à l'intérieur de la deuxième gorge (118),
le chemin de roulement (110, 310) étant formé de trois composants, à savoir une bague (350) ou un boîtier d'une autre forme destiné à tourner librement, une première rondelle (360) et une deuxième rondelle (370).

2. Outil selon la revendication 1, dans lequel chacun des premier et deuxième plots (144, 146) a une forme substantiellement cylindrique.

3. Outil selon la revendication 1, dans lequel chacun des premier et deuxième plots (244, 246) est effilé.

4. Outil selon la revendication 1, dans lequel le chemin de roulement est constitué d'une bague, d'une première rondelle et d'une deuxième rondelle et la bague (350) a une forme substantiellement cylindrique.

5. Outil selon la revendication 4, dans lequel la bague (350) comporte un premier lamage (352) formé dans un premier côté de la bague et un deuxième lamage (354) formé dans un côté opposé de la bague, et dans lequel le premier lamage (352) est formé de manière à recevoir au moins une portion de la première rondelle (360) et le deuxième lamage (354) est formé de manière à recevoir au moins une portion de la deuxième rondelle (370).

6. Outil selon la revendication 5, dans lequel la première gorge (120) est formée dans une surface interne de la première rondelle (360) et la deuxième gorge (118) est formée dans une surface interne de la deuxième rondelle (370).

7. Outil selon la revendication 1, dans lequel le palier (100, 300) est disposé dans une poignée (406) de l'outil (400).

8. Outil selon la revendication 1, dans lequel le palier (100, 300) est disposé dans le support d'un outil.
